# EUROPEAN PATENT SPECIFICATION

(11) **EP 3 412 952 B1**
(45) Date of publication and mention of the grant of the patent: **02.12.2020**
(21) Application number: 17747200.8
(22) Date of filing: 19.01.2017
(51) Int. Cl.: F16L 11/12, F17D 5/02, F16L 11/02, F16L 11/08, F16L 33/30, F16L 11/133, F16L 33/01, G01M 3/28

(54) **MARINE HOSE STATUS MONITORING SYSTEM**
MARINESCHLAUCHZUSTANDSÜBERWACHUNGSSYSTEM
SYSTÈME DE SURVEILLANCE D'ÉTAT DE TUYAU MARITIME

(30) Priority: 04.02.2016 JP 2016019915
(43) Date of publication of application: 12.12.2018
(73) Proprietor: The Yokohama Rubber Co., Ltd., Minato-ku Tokyo 105-8685 (JP)
(72) Inventor: ONO, Shunichi, Hiratsuka-shi, Kanagawa 254-8601 (JP); FUSE, Noriyuki, Hiratsuka-shi, Kanagawa 254-8601 (JP)
(74) Representative: Grünecker Patent- und Rechtsanwälte PartG mbB
(86) International application number: PCT/JP2017/001662
(87) International publication number: WO 2017/135041

(56) References cited:
- EP-A1- 0 025 344
- EP-A1- 1 460 408
- EP-A2- 1 795 879
- JP-A- H08 100 874
- JP-A- 2003 156 180
- JP-A- 2003 156 180
- JP-A- 2009 002 457
- JP-A- 2009 002 457
- JP-A- 2009 002 458

## Description

### Technical Field

The present invention relates to a marine hose status monitoring system, and particularly relates to a marine hose status monitoring system capable of more reliably and more quickly detecting the occurrence of damage to an inner surface layer of a hose body.

### Background Art

A marine hose is used when connecting an offshore tanker to an onshore facility to convey crude oil, or the like. The environment under which the marine hose is used is various and involves different natural environments, including wave, wind, and tide environments. These natural environments constantly change. For example, when a typhoon or the like approaches and waves increase in height, large external forces act on the marine hose from various directions. As a result, the marine hose undergoes elongation, bending, twisting, and other various deformations. When the external forces that act on the marine hose become extremely large, increasing deformation, there is a danger that the marine hose will become damaged. Specifically, an inner surface layer constituting the hose body becomes damaged, causing the crude oil or the like conveyed through the marine hose to escape and diffuse into the surrounding area. Therefore, the capability of more reliably and more quickly detecting the occurrence of damage to the inner surface layer before the damage enlarges is desired. Document EP 0 025 344 A1 discloses a marine hose with a status monitoring system that determines a status of the marine hose comprising a hose body provided with an inner surface layer, a reinforcing layer disposed on an outer circumferential side of the inner surface layer, and an outer surface layer disposed on an outer circumferential side of the reinforcing layer, and a connection fitting connected to both end portions of the hose body in a longitudinal direction, the marine hose status monitoring system comprising:a leakage detection member embedded to extend inside the inner surface layer; and a sensing unit connected to the leakage detection member; the sensing unit determining that damage has occurred to the inner surface layer when a fluid flowing through a fluid flow path of the hose body comes into contact with the leakage detection member. Document JP2009002457 A discloses the use of a fabric element as sensing unit.

In the related art, various inventions for detecting the occurrence of damage to the inner surface layer of a marine hose have been proposed (refer to Patent Document 1, for example). In Patent Document 1, a marine hose provided with an electrically conductive elastomer member embedded between an inner rubber layer constituting a hose body and a reinforcing layer disposed on an outer circumferential side thereof is proposed. According to the marine hose proposed in this literature, the electrically conductive elastomer member swells when the conveyed fluid leaks from the inner rubber layer. With the swelling of the electrically conductive elastomer member, a resistance value increases, making it possible to detect the leakage of the fluid from the inner rubber layer by detecting a change in this resistance value. Nevertheless, when minor damage before leakage of a fluid from the inner rubber layer occurs, the electrically conductive elastomer member does not swell. Further, when the amount of fluid that leaks is small, the swelling of the electrically conductive elastomer member conductive elastomer member is slight, making it impossible to determine the occurrence of damage to the inner surface rubber layer. Thus, there is room for improvement in more reliably and more quickly detecting the occurrence of damage to the inner rubber layer.

### Citation List

### Patent Literature

Patent Document 1: JP 2009-2457 A

### Summary of Invention

### Technical Problem

An object of the present invention is to provide a marine hose status monitoring system capable of more reliably and more quickly detecting the occurrence of damage to an inner surface layer of a hose body.

### Solution to Problem

The marine hose status monitoring system according to the present invention is defined by claim 1.

### Advantageous Effects of Invention

According to the present invention, the leakage detection member is embedded so as to extend inside the inner surface layer constituting the hose body, making it possible to detect the occurrence of damage to the inner surface layer by the leakage detector when such damage occurs and conveyed fluid comes into contact with the leakage detection member. In this way, the occurrence of damage to the inner surface layer can be determined before the inner surface layer is penetrated and fluid leakage occurs. Thus, the occurrence of damage to the inner surface layer can be detected more reliably and more quickly compared to the related art.

The system according to the invention is configured so that the marine hose status monitoring system further includes a fluid penetration member that is located adjacent to the leakage detection member, is embedded in the inner surface layer, and allows penetration of the fluid. This fluid penetration member is disposed in a range that is at least 100 mm frontward and rearward in the longitudinal direction of the hose body with respect to an insertion side end of the connection fitting. The range of at least 100 mm frontward and rearward in the longitudinal direction of the hose body with respect to the insertion side end of the connection fitting is a range where stress concentration occurs in the inner surface layer, and is thus readily susceptible to damage. Thus, when damage occurs to the inner surface layer, the fluid more readily penetrates the fluid penetration member, bringing the fluid into contact with the leakage detection member more reliably and more quickly. This is advantageous to more reliably and more quickly detecting the occurrence of damage to the inner surface layer. The fluid penetration member is, for example, located adjacent to the leakage detection member on an inner circumferential side of the hose body.

To exhibit the advantages achieved by the fluid penetration member across a wider range, the specifications are configured so that, for example, the fluid penetration member is disposed in a range from a position of 100 mm on a rearward side in the longitudinal direction of the hose body from the insertion side end of the connection fitting to a position at a length equivalent to at least 30% of a total length of the hose body on a front side.

The specifications may be configured so that the leakage detection member, for example, extends while winding in a spiral-like manner around the hose body. Or, the specifications may be configured so that the leakage detection member extends in the longitudinal direction of the hose body.

Examples of the fluid penetration member used include a fiber layer having a cord fabric structure. Use of the fiber layer having a cord fabric structure allows the fluid to readily penetrate while suppressing an increase in a bending rigidity of the hose body.

The specifications may also be configured so that the marine hose status monitoring system further includes a transmission unit that is connected to the leakage detector and receives input of detection data of the leakage detector, and a receiving unit that receives the detection data wirelessly transmitted from the transmission unit. According to these specifications, whether damage has occurred to the inner surface layer can be determined in real-time at a desired position away from the marine hose.

### Brief Description of Drawings

FIG. 1 is an explanatory diagram illustrating a marine hose status monitoring system of the present invention.
FIG. 2 is an explanatory diagram illustrating a portion of the marine hose in FIG. 1 in a longitudinal sectional view.
FIG. 3 is an explanatory diagram illustrating the marine hose in FIG. 1 in a front view (arrow view from one connection fitting side to the other connection fitting side).
FIG. 4 is an explanatory diagram illustrating a fluid penetration member in FIG. 2.
FIG. 5 is an explanatory diagram illustrating a hose line formed so as to connect the marine hoses.
FIG. 6 is an explanatory diagram illustrating a hose body that incurred damage to an inner surface layer, in a horizontal sectional view.
FIG. 7 is an explanatory diagram illustrating another layout example of the leakage detection member.
FIG. 8 is an explanatory diagram illustrating a range where the fluid penetration member is disposed.
FIG. 9 is an explanatory diagram illustrating a modified example of the range where the fluid penetration member is disposed.

### Description of Embodiments

A marine hose status monitoring system according to the present invention will be described below on the basis of embodiments illustrated in the drawings.

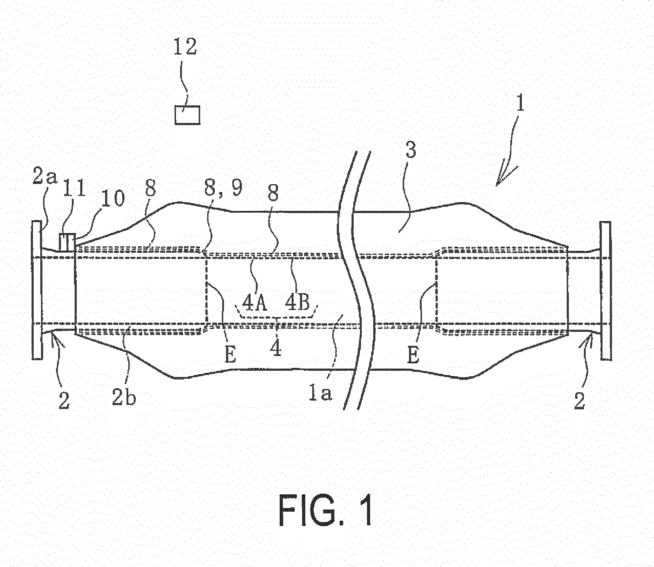

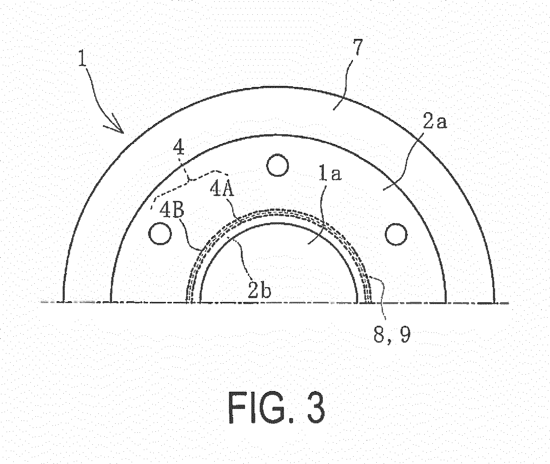

As illustrated in FIGS. 1 to 3, the marine hose status monitoring system (hereinafter referred to as "monitoring system 1") of the present invention includes a marine hose 1 having special specifications, and a leakage detector 10. The marine hose 1 includes a hose body 3, and a connection fitting 2 connected to each of both end portions of the hose body 3 in a longitudinal direction.

The hose body 3 includes an inner surface layer 4 (a first inner surface layer 4A and a second inner surface layer 4B), a reinforcing layer 5 (a main reinforcing layer 5A and a body wire layer 5B) disposed on an outer circumferential side of the inner surface layer 4, and an outer surface layer 7 disposed on an outer circumferential side of the reinforcing layer 5. The hose body 3 is further suitably provided with other required members. The marine hose 1 of this embodiment is a floating type, and thus a buoyant layer 6 formed by a buoyant material such as sponge is interposed between the reinforcing layer 5 and the outer surface layer 7. The present invention may be applied not only to the marine hose 1 of a floating type, but also to a marine hose of a sub-marine type that does not include the buoyant layer 6.

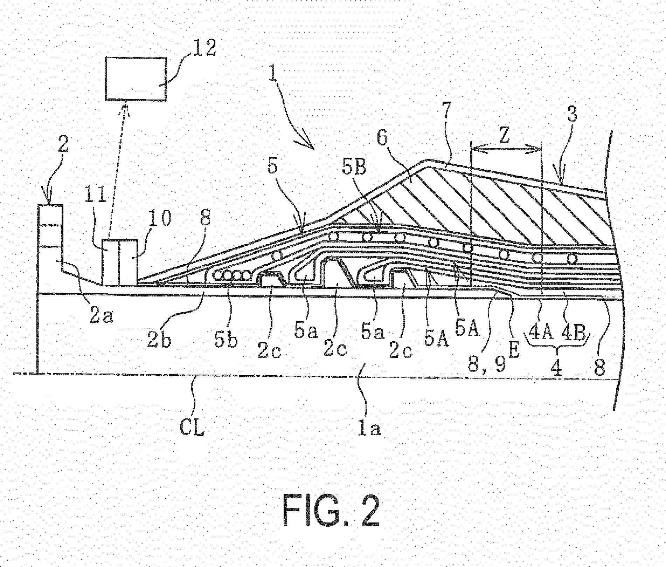

The connection fitting 2 includes a flange 2a that has a disc shape, and a nipple 2b that has a tubular shape, is bonded to the flange 2a, and on a leading edge portion side is inserted into the hose body 3. The first inner surface layer 4A, the second inner surface layer 4B, the main reinforcing layer 5A, and the body wire layer 5B are wound and layered around an outer circumference of the nipple 2b, in that order toward the outer circumferential side, with an outermost circumference being covered by the outer surface layer 7. An inner circumferential side of the first inner surface layer 4A serves as a fluid flow path la. A line segment CL in FIG. 2 is a center line that extends in an axial direction of the marine hose 1.

The inner surface layer 4 that comes into contact with a fluid F conveyed through the marine hose 1 has a two-layer structure of the first inner surface layer 4A and the second inner surface layer 4B. The first inner surface layer 4A that comes into direct contact with the conveyed fluid F and the second inner circumferential layer 4B adjacent to an outer circumferential side thereof are made from an acrylonitrile rubber or the like excellent in oil resistance, for example. The body wire layer 5B is configured by winding a metal wire around a rubber layer on an outer circumference of the main reinforcing layer 5A in a spiral-like manner at a predetermined interval. The main reinforcing layer 5A is configured by layering a plurality of reinforcing cord layers obtained by covering a reinforcing cord with rubber.

Nipple wires 5a, 5b of respective first end portions of the main reinforcing layer 5A and the body wire layer 5B are fixed to the nipple 2b by fixing rings 2c or the like projecting to an outer circumferential surface of the nipple 2b. The outer surface layer 7 is made from a non-water-permeable material such as rubber.

Then, the marine hose 1 further includes, as special specifications, a leakage detection member 8 that is embedded inside the inner surface layer 4 so as to extend between the first inner surface layer 4A and the second inner surface layer 4B. The leakage detection member 8 extends in the longitudinal direction of the hose body 3, from a first end portion to a second end portion of the hose body 3 in the longitudinal direction. Examples of the leakage detection member 8 used include a swelling rubber that swells upon contact with the fluid F, such as crude oil, or a member that functions as a flow path that allows the fluid F to flow therethrough.

The leakage detector 10 is, for example, attached to the outer circumferential side of the nipple 2b of the connection fitting 2, the flange 2a, or the hose body 3, and connected to the leakage detection member 8. The leakage detector 10 is a device that determines that damage has occurred to the inner surface layer 4 (the first inner surface layer 4A) when the fluid F flowing through the fluid flow path 1a comes into contact with the leakage detection member 8.

The marine hose 1 of this embodiment further includes a fluid penetration member 9 that is adjacent to the leakage detection member 8, is embedded in the inner surface layer 4, and allows penetration of the fluid F. This fluid penetration member 9 is disposed in a range Z that is at least 100 mm frontward and rearward in the longitudinal direction of the hose body 3 with respect to an insertion side end E of the connection fitting 2. In this embodiment, the fluid penetration member 9 is disposed adjacent to an inner circumferential side of the leakage detection member 8.

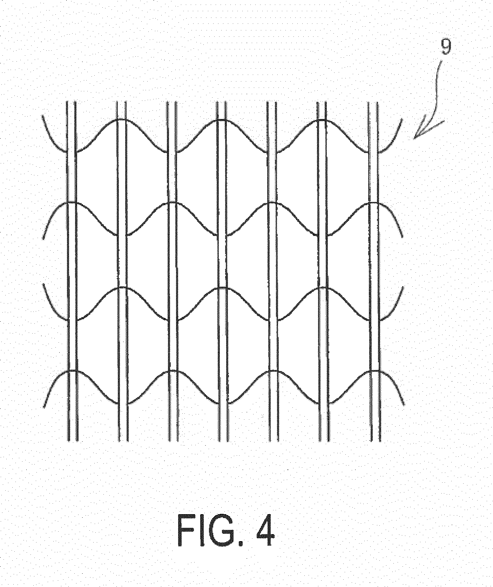

The fluid penetration member 9 is a member that allows penetration of the fluid F when in contact with the fluid F. Examples of the fluid penetration member 9 used include a fiber layer made from cotton, nylon, or the like. Specifically, a fiber layer having a cord fabric structure formed by a fiber such as cotton or nylon such as illustrated in FIG. 4 may be used. Use of the fiber layer having a cord fabric structure as the fluid penetration member 9 allows the fluid F to readily penetrate while suppressing an increase in a bending rigidity of the hose body 3.

According to this embodiment, the marine hose status monitoring system further includes a transmission unit 11 that is connected to the leakage detector 10 and receives input of detection data (detection data indicating that damage has occurred to the inner surface layer 4) of the leakage detector 10, and a receiving unit 12 that receives the detection data wirelessly transmitted from the transmission unit 11. Detection data is periodically input to the transmission unit 11, and this transmission unit 11 periodically wirelessly transmits the detection data to the receiving unit 12. For example, detection data is successively input to the transmission unit 11, and the transmission unit 11 successively wirelessly transmits this detection data to the receiving unit 12. The receiving unit 12 can be disposed in a desired position.

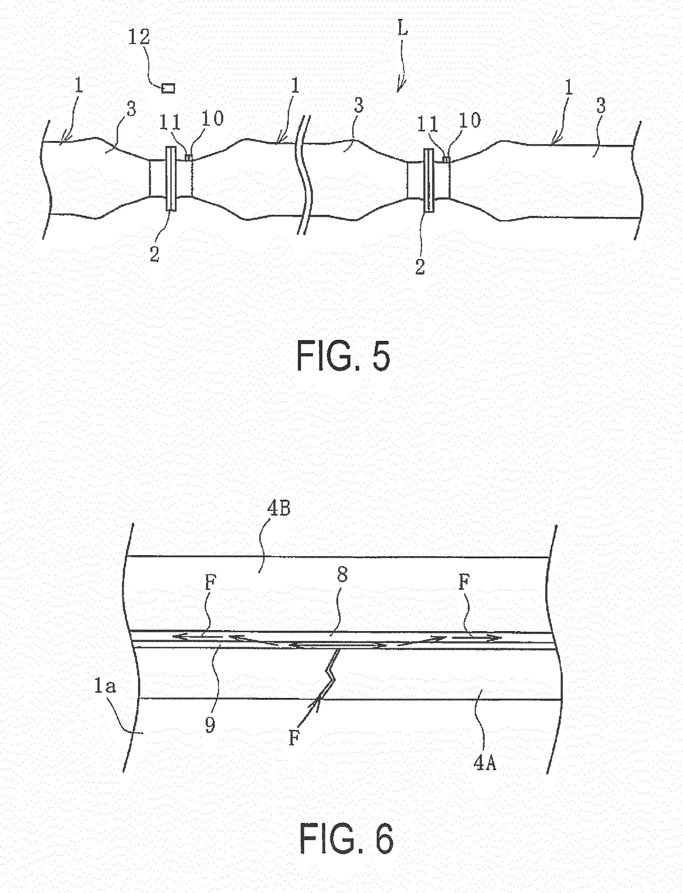

As illustrated in FIG. 5, a plurality of the marine hoses 1 are connected via the respective connection fittings 2, forming a hose line L. According to this embodiment, the hose line L is afloat on the ocean, and external forces act on the marine hoses 1 from waves, winds, and tides. As a result, the marine hose 1 undergoes elongation, bending, twisting, and other various deformations.

The method of using this monitoring system will be described below.

When an external force acts on the marine hose 1, excessively deforming the hose body 3 and causing damage to the first inner surface layer 4A as illustrated in FIG. 6, the fluid F conveyed through the fluid flow path 1a comes into contact with the leakage detection member 8. As a result, the leakage detector 10 determines through the leakage detection member 8 that damage has occurred to the inner surface layer 4 (the first inner surface layer 4A). That is, the occurrence of damage to the inner surface layer 4 can be determined before the inner surface layer 4 is fully damaged and the fluid F penetrates the inner surface layer 4 and leaks to the exterior of the inner surface layer 4. For example, when a swelling rubber is used as the leakage detection member 8, the fluid F causes the leakage detection member 8 to swell and this fluid F is transmitted to the leakage detector 10. When a member that functions as a flow path that allows the fluid F to flow therethrough is used as the leakage detection member 8, the fluid F that leaks upon damage to the first inner surface layer 4A flows through the leakage detection member 8 and is transmitted to the leakage detector 10. As a result, the leakage detector 10 can determine that damage has occurred to the inner surface layer 4.

Thus, disposing the leakage detection member 8 across as wide a range as possible in the longitudinal direction of the hose body 3 is advantageous to more reliably determine the occurrence of damage to the inner surface layer 4. According to this embodiment, the fluid penetration member 9 penetrated by the fluid F allows the fluid F to readily come into contact (promotes contact) with the leakage detection member 8 adjacent thereto. As a result, even when there is minimal leakage of the fluid F when damage has occurred to the first inner surface layer 4A, the fluid F penetrates the fluid penetration member 9, allowing the fluid F to come into contact with (promoting contact with) the leakage detection member 8 more reliably and more quickly. This is advantageous to more reliably and more quickly detect the occurrence of damage to the inner surface layer 4 by the leakage detector 10. Thus, similarly increasing a length across which the fluid penetration member 9 is adjacent to the leakage detection member 8 is advantageous to more reliably and more quickly detecting the occurrence of damage to the inner surface layer 4.

According to this embodiment, the transmission unit 11 and the receiving unit 12 are further provided, making it possible to arrange the receiving unit 12 in a vessel or an onshore facility, for example. In this way, the status of the marine hose 1 can be determined in real-time at a desired position away from the marine hose 1. When the monitoring system is not provided with the transmission unit 11 or the receiving unit 12, the status of the marine hose 1 is suitably determined by visually observing the leakage detector 10 or the like.

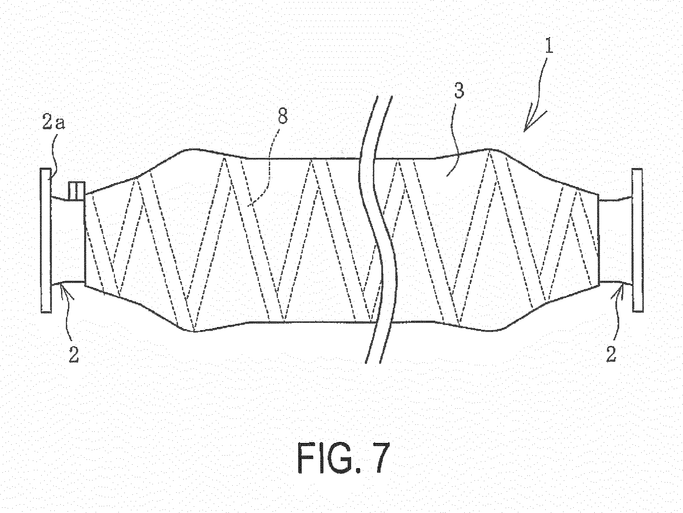

The leakage detection member 8 may also be extended from the first end portion to the second end portion of the hose body 3 while wound in a spiral-like manner around the hose body 3, as illustrated in FIG. 7. This is advantageous to more reliably and more quickly detect the occurrence of damage to the inner surface layer 4 across a wider range of the hose body 3.

As described above, according to the present invention, the leakage detection member 8 is embedded so as to extend inside the inner surface layer 4, making it possible to determine the occurrence of damage to the inner surface layer 4 by the leakage detector 10 before the inner surface layer 4 is completely penetrated and the fluid F leaks to the exterior of the inner surface layer 4. Thus, the occurrence of damage to the inner surface layer 4 can be detected more reliably and more quickly compared to the related art, making it possible to determine and avoid fatal damage of the marine hose 1 in advance.

The specifications may also be configured so that the fluid penetration member 9 is disposed only in the range Z that is 100 mm frontward and rearward in the longitudinal direction of the hose body 3 with respect to the insertion side end E of the connection fitting 2. In this range Z, the inner surface layer 4 is susceptible to damage by stress concentration caused by external forces acting on the hose body 3. As a result, according to these specifications, the fluid F that leaks upon damage to the first inner surface layer 4A can be effectively brought into contact with the leakage detection member 8 while minimizing the used amount of the fluid penetration member 9. Accordingly, the occurrence of damage to the inner surface layer 4 is more reliably and more quickly detected.

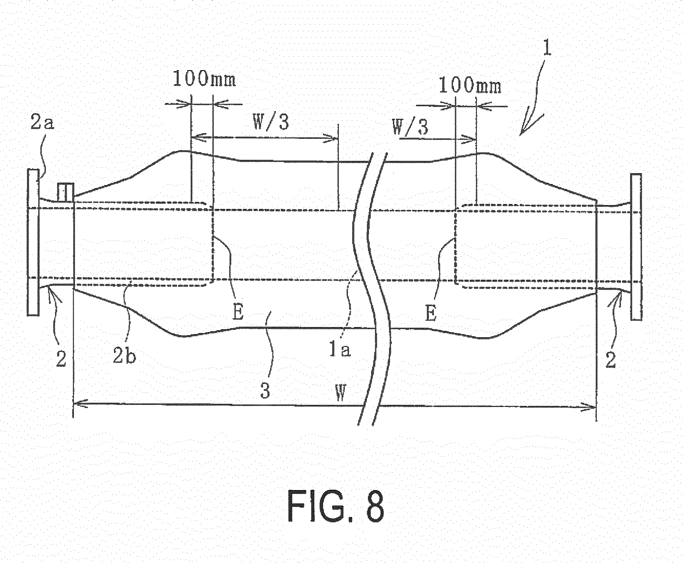

To exhibit the advantages achieved by the fluid penetration member 9 across a wider range, the specifications may be configured so that, as illustrated in FIG. 8, the fluid penetration member 9 is disposed in a range from a position of 100 mm on the rearward side in the longitudinal direction of the hose body 3 from the insertion side end E of the connection fitting 2 to a position at a length equivalent to at least 30% of a total length W of the hose body 3 on the frontward side. For example, the fluid penetration member 9 is disposed in a range from a position of 100 mm on the rearward side in the longitudinal direction of the hose body 3 to a position at a length equivalent to 30% of the total length W of the hose body 3 on the frontward side. According to these specifications, the occurrence of damage to the inner surface layer 4 can be effectively determined while suppressing the used amount of the fluid penetration member 9.

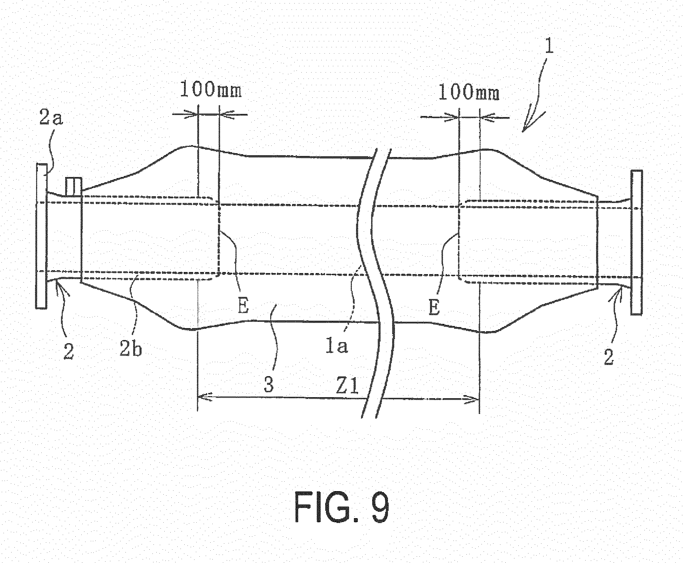

Alternatively, as illustrated in FIG. 9, the fluid penetration member 9 may also be provided in a range Z1 from a position of 100 mm on the rearward side in the longitudinal direction of the hose body 3 with respect to the insertion side end E of the connection fitting 2 (nipple 2b) on the first end side to a position of 100 mm on the rearward side in the longitudinal direction of the hose body 3 with respect to the insertion side end E of the connection fitting 2 (nipple 2b) on the second end side. Alternatively, the fluid penetration member 9 may also be provided across the total length W (entire range) of the hose body 3.

### Reference Signs List

- 1: Marine hose
- 1a: Fluid flow path
- 2: Connection fitting
- 2a: Flange
- 2b: Nipple
- 2c: Fixing ring
- 3: Hose body
- 4: Inner surface layer
- 4A: First inner surface layer
- 4B: Second inner surface layer
- 5: Reinforcing layer
- 5A: Main reinforcing layer
- 5a: Nipple wire
- 5B: Body wire layer
- 5b: Nipple wire
- 6: Buoyant layer
- 7: Outer surface layer
- 8: Leakage detection member
- 9: Fluid penetration member
- 10: Leakage detector
- 11: Transmission unit
- 12: Receiving unit
- F: Fluid
- L: Hose line

## Claims

1. A marine hose status monitoring system that determines a status of a marine hose comprising a hose body provided with an inner surface layer, a reinforcing layer disposed on an outer circumferential side of the inner surface layer, and an outer surface layer disposed on an outer circumferential side of the reinforcing layer, and a connection fitting connected to both end portions of the hose body in a longitudinal direction, the marine hose status monitoring system comprising:
a marine hose (1) comprising a hose body provided with an inner surface layer (4), a reinforcing layer (5) disposed on an outer circumferential side of the inner surface layer, and an outer surface layer (7) disposed on an outer circumferential side of the reinforcing layer, and a connection fitting (2) connected to both end portions of the hose body in a longitudinal direction;
wherein the inner surface layer (4) has a two-layer structure of a first inner surface layer (4A) that comes into direct contact with the conveyed fluid and a second inner surface layer (4B) adjacent to an outer circumferential side of the first inner surface layer;
a leakage detection member (8) embedded to extend inside the inner surface layer so as to extend between the first inner surface layer (4A) and the second inner surface layer (4B);
a leakage detector (10) connected to the leakage detection member;
the leakage detector determining that damage has occurred to the inner surface layer when a fluid flowing through a fluid flow path of the hose body comes into contact with the leakage detection member; and
a fluid penetration member (9) that is located adjacent to the leakage detection member, is embedded in the inner surface layer, and allows penetration of the fluid;
the fluid penetration member (9) being disposed in a range that is at least 100 mm frontward and rearward in the longitudinal direction of the hose body with respect to an insertion side end of the connection fitting (2).

2. The marine hose status monitoring system according to claim 1, wherein the fluid penetration member (9) is located adjacent to the leakage detection member on an inner circumferential side of the hose body.

3. The marine hose status monitoring system according to claim 1 or 2, wherein the fluid penetration member (9) is disposed in a range from a position of 100 mm on a rearward side in the longitudinal direction of the hose body from an insertion side end of the connection fitting (2) to a position at a length equivalent to at least 30% of a total length of the hose body on a frontward side.

4. The marine hose status monitoring system according to any one of claims 1 to 3, wherein the leakage detection member (8) extends while winding in a spiral-like manner around the hose body.

5. The marine hose status monitoring system according to any one of claims 1 to 3, wherein the leakage detection member (8) extends in the longitudinal direction of the hose body.

6. The marine hose status monitoring system according to any one of claims 1 to 5, wherein the fluid penetration member (9) is a fiber layer having a cord fabric structure.

7. The marine hose status monitoring system according to any one of claims 1 to 6, further comprising:
a transmission unit (11) that is connected to the leakage detector (10) and receives input of detection data of the leakage detector; and
a receiving unit (12) that receives the detection data wirelessly transmitted from the transmission unit.

## Patentansprüche

1. Marineschlauchstatus-Überwachungssystem, das den Status eines Marineschlauchs bestimmt, umfassend einen Schlauchkörper, der mit einer Innenoberflächenschicht, einer Verstärkungsschicht, die auf einer Außenumfangseite der Innenoberflächenschicht angeordnet ist, und einer Außenoberflächenschicht, die auf einer Außenumfangsseite der Verstärkungsschicht angeordnet ist, und einem Verbindungspassstück versehen ist, das in Längsrichtung mit beiden Endabschnitten des Schlauchkörpers verbunden ist, wobei das Marineschlauchstatus-Überwachungssystem umfasst:
einen Marineschlauch (1), umfassend einen Schlauchkörper, der mit einer Innenoberflächenschicht (4) versehen ist, eine Verstärkungsschicht (5), die auf einer Außenumfangsseite der Innenoberflächenschicht angeordnet ist, und eine Außenoberflächenschicht (7), die auf einer Außenumfangsseite der Verstärkungsschicht angeordnet ist, und ein Verbindungspassstück, das in Längsrichtung mit beiden Endabschnitten des Schlauchkörpers verbunden ist;
wobei die Innenoberflächenschicht (4) eine zweischichtige Struktur einer ersten Innenoberflächenschicht (4A), die in direkten Kontakt mit dem geförderten Fluid kommt, und einer zweiten Innenoberflächenschicht (48) neben einer Außenumfangsseite der ersten Innenoberflächenschicht aufweist;
ein Leckerkennungselement (8), das derart eingebettet ist, dass es sich innerhalb der Innenoberflächenschicht erstreckt, um sich zwischen der ersten Innenoberflächenschicht (4A) und der zweiten Innenoberflächenschicht (4B) zu erstrecken;
einen Leckdetektor (10), der mit dem Leckerfassungselement verbunden ist;
wobei der Leckdetektor bestimmt, dass eine Beschädigung der Innenoberflächenschicht aufgetreten ist, wenn ein Fluid, das durch einen Fluidströmungsweg des Schlauchkörpers fließt, mit dem Leckerfassungselement in Kontakt kommt; und
ein Fluidpenetrationselement (9), das sich neben dem Leckerfassungselement befindet, in die Innenoberflächenschicht eingebettet ist und das Eindringen des Fluids ermöglicht;
wobei das Fluidpenetrationselement (9) in einem Bereich angeordnet ist, der in Längsrichtung des Schlauchkörpers in Bezug auf ein einführungsseitiges Ende des Verbindungspassstücks (2) wenigstens 100 mm nach vorne und nach hinten beträgt.

2. Marineschlauchstatus-Überwachungssystem nach Anspruch 1, bei dem sich das Fluidpenetrationselement (9) neben dem Leckerfassungselement auf einer Innenumfangsseite des Schlauchkörpers befindet.

3. Marineschlauchstatus-Überwachungssystem nach Anspruch 1 oder 2, bei dem das Fluidpenetrationselement (9) in einem Bereich von einer Position von 100 mm auf einer Rückseite in Längsrichtung des Schlauchkörpers von einem einführungsseitigen Ende des Verbindungspassstücks (2) zu einer Position in einer Länge angeordnet ist, die wenigstens 30% der Gesamtlänge des Schlauchkörpers auf einer Vorderseite entspricht.

4. Marineschlauchstatus-Überwachungssystem nach einem der Ansprüche 1 bis 3, bei dem sich das Leckerfassungselement (8) derart erstreckt, dass es sich spiralförmig um den Schlauchkörper windet.

5. Marineschlauchstatus-Überwachungssystem nach einem der Ansprüche 1 bis 3, bei dem sich das Leckerfassungselement (8) in Längsrichtung des Schlauchkörpers erstreckt.

6. Marineschlauchstatus-Überwachungssystem nach einem der Ansprüche 1 bis 5, bei dem das Fluidpenetrationselement (9) eine Faserschicht mit einer Schnurgewebestruktur ist.

7. Marineschlauchstatus-Überwachungssystem nach einem der Ansprüche 1 bis 6, weiterhin umfassend:
eine Sendeeinheit (11), die mit dem Leckdetektor (10) verbunden ist und die Eingabe von Erfassungsdaten des Leckdetektors empfängt; und
eine Empfangseinheit (12), die die von der Sendeeinheit drahtlos gesendeten Erfassungsdaten empfängt.

## Revendications

1. Système de surveillance d'état de tuyau souple marin qui détermine l'état d'un tuyau souple marin comprenant un corps de tuyau muni d'une couche de surface interne, d'une couche de renforcement placée sur la circonférence externe de la couche de surface interne et d'une couche de surface externe placée sur la circonférence externe de la couche de renforcement, ainsi que d'un raccord de connexion relié aux deux extrémités du corps de tuyau dans la direction longitudinale, le système de surveillance d'état de tuyau souple marin comprenant :
un tuyau souple marin (1) comprenant un corps de tuyau muni d'une couche de surface interne (4), d'une couche de renforcement (5) placée sur la circonférence externe de la couche de surface interne et d'une couche de surface externe (7) placée sur la circonférence externe de la couche de renforcement, ainsi que d'un raccord de connexion (2) relié aux deux extrémités du corps de tuyau dans la direction longitudinale,
dans lequel la couche de surface interne (4) présente une structure à deux couches constituée d'une première couche de surface interne (4A) qui vient en contact direct avec le fluide transporté, et d'une seconde couche de surface interne (4B) adjacente à la circonférence externe de la première couche de surface interne,
un élément de détection de fuite (8) intégré pour se déployer à l'intérieur de la couche de surface interne de sorte à s'étendre entre la première couche de surface interne (4A) et la seconde couche de surface interne (4B),
un détecteur de fuite (10) relié à l'élément de détection de fuite,
le détecteur de fuite déterminant qu'une détérioration s'est produite sur la couche de surface interne lorsqu'un fluide circulant au travers d'une voie d'écoulement de fluide du corps de tuyau vient au contact de l'élément de détection de fuite, et
un élément de pénétration de fluide (9), qui est situé pour être contigu à l'élément de détection de fuite, est intégré dans la couche de surface interne et autorise une pénétration du fluide,
l'élément de pénétration de fluide (9) étant placé dans une plage qui se trouve à au moins 100 mm vers l'avant et vers l'arrière dans la direction longitudinale du corps de tuyau par rapport à l'extrémité de côté d'insertion du raccord de connexion (2).

2. Système de surveillance d'état de tuyau souple marin selon la revendication 1, dans lequel l'élément de pénétration de fluide (9) est situé pour être contigu à l'élément de détection de fuite sur le côté circonférentiel interne du corps de tuyau.

3. Système de surveillance d'état de tuyau souple marin selon la revendication 1 ou la revendication 2, dans lequel l'élément de pénétration de fluide (9) est placé dans une plage allant d'une position située à 100 mm sur le côté arrière dans la direction longitudinale du corps de tuyau à partir de l'extrémité du raccord de connexion (2) jusqu'à une position située à une longueur équivalente à au moins 30 % de la longueur totale du corps de tuyau sur le côté avant.

4. Système de surveillance d'état de tuyau souple marin selon l'une quelconque des revendications 1 à 3, dans lequel l'élément de détection de fuite (8) se déploie tout en s'enroulant sous la forme d'une spirale autour du corps de tuyau.

5. Système de surveillance d'état de tuyau souple marin selon l'une quelconque des revendications 1 à 3, dans lequel l'élément de détection de fuite (8) se déploie dans la direction longitudinale du corps de tuyau.

6. Système de surveillance d'état de tuyau souple marin selon l'une quelconque des revendications 1 à 5, dans lequel l'élément de pénétration de fluide (9) est une couche en fibres comportant une structure de tissu de cordon.

7. Système de surveillance d'état de tuyau souple marin selon l'une quelconque des revendications 1 à 6, comprenant en outre :
une unité de transmission (11) qui est reliée au détecteur de fuite (10 qui reçoit une entrée constituée de données de détection du détecteur de fuite, et
une unité de réception (12) qui reçoit les données de détection transmises sans fil en provenance de l'unité de transmission.
